# EUROPÄISCHE PATENTSCHRIFT

(11) **EP 1 509 692 B1**
(45) Veröffentlichungstag und Bekanntmachung des Hinweises auf die Patenterteilung: **13.05.2009**
(21) Anmeldenummer: 03752733.0
(22) Anmeldetag: 13.05.2003
(51) Int. Cl.: F02M 25/07, F28F 27/02

(54) **SCHALTBARER ABGASWAERMETAUSCHER**
SWITCHABLE WASTE GAS EXCHANGER
ECHANGEUR DE CHALEUR DES GAZ D'ECHAPPEMENT A COMMUTATION

(30) Priorität: 15.05.2002 HU 0200144 U; 26.07.2002 DE 10234187
(43) Veröffentlichungstag der Anmeldung: 02.03.2005
(73) Patentinhaber: Behr GmbH & Co. KG, 70469 Stuttgart (DE)
(72) Erfinder: MERCZ, József, 73525 Schwäbisch Gmünd (DE); SZABO, András, H-1025 Budapest (HU); TOTH, Gyula, H-1037 Budapest (HU)
(74) Vertreter: Grauel, Andreas
(86) Internationale Anmeldenummer: PCT/EP2003/004958
(87) Internationale Veröffentlichungsnummer: WO 2003/098026

(56) Entgegenhaltungen:
- EP-A- 0 987 427
- EP-A- 1 030 050
- DE-A- 10 025 877
- DE-A- 19 812 702
- DE-U- 29 722 813
- FR-A- 2 827 011
- US-A1- 2001 020 363
- US-B1- 6 213 105

## Beschreibung

Die vorliegende Erfindung betrifft schaltbare Abgaswärmetauscher. Gattungsgemäß zugrundegelegte schaltbare Abgaswärmetauscher sind beispielsweise aus der EP 1 030 050 A1 bekannt. Sie finden insbesondere in Abgasrückführleitungen von Brennkraftmaschinen, und speziell in Abgasrückführleitungen von Brennkraftmaschinen von Kraftfahrzeugen Verwendung.

Es ist bekannt, bei Brennkraftmaschinen eine Rückführung von ausgestoßenem Abgas an die Frischluftansaugseite vorzunehmen. Die Rückführung von Abgas bei Brennkraftmaschinen dient der Konditionierung des Abgases. Zur Optimierung der Schadstoffemissionen und des Kraftstoffverbrauchs der Brennkraftmaschine kann es günstig sein, wenn von der Brennkraftmaschine ausgestoßenes Abgas wieder auf deren Luftansaugseite zurückgeführt wird. Hierbei gibt es Betriebszustände, wie den Kaltstart, bei denen es besonders günstig ist, wenn die Abgastemperatur des Abgases möglichst hoch ist, da dann beispielsweise eine rasche innere Erwärmung der Brennkraftmaschine erfolgt. In anderen Betriebszuständen wird es bevorzugt, die Temperatur des rückgeführten Abgases möglichst zu verringern, beispielsweise um eine größere Dichte des Volumenstromes des zurückgeführten Abgases zu erreichen.

Hierzu ist es, beispielsweise aus der gattungsgemäß zugrundegelegten Druckschrift bekannt, einen schaltbaren Abgaswärmetauscher in der Abgasrückführleitung vorzusehen, bei dem hindurchgeführtes Abgas wahlweise gekühlt oder nicht gekühlt werden kann.

Aus der DE 297 22 813 U1 ist andererseits bekannt, ein Thermostatventil zur Begrenzung des Kühlmittelstroms zu dem Abgaskühler vorzusehen.

Bei einem gattungsgemäß zugrundegelegten schaltbaren Abgaswärmetauscher strömt Abgas von einer Abgaszuführleitung durch den schaltbaren Abgaswärmetauscher zu einer Abgasausleitung. Dabei wird die Möglichkeit geschaffen, das an der Abgaszufuhrleitung anströmende Abgas entweder durch einen ersten Abgaskanal, in dem ein kühlmitteldurchströmter Wärmetauscher angeordnet ist, oder durch einen zweiten Abgaskanal, der an dem Wärmetauscher vorbei führt, zu einer Abgasausleitung zu führen. Es ist dabei ein Schaltventil angeordnet, der das Schalten des Abgasstromes zwischen den Abgaskanälen vornimmt.

Aufgabe der Erfindung ist es einen solchen Abgaswärmetauscher hinsichtlich Aufbau und Ansteuerung zu vereinfachen.

Diese Aufgabe wird bei zugrundelegen eines gattungsgemäßen Abgaswärmetauscher erfindungsgemäß durch einen Abgaswärmetauscher gemäß den unabhängigen Ansprüchen gelöst.

Ein erfindungsgemäßer schaltbarer Abgaswärmetauscher weist eine Abgaszufuhrleitung und eine Abgasausleitung für einen Abgasstrom auf. Es ist ein erster und ein zweiter Abgaskanal und ein Schaltventil zum Schalten des Abgasstromes zwischen den Abgaskanälen vorgesehen. Im ersten Abgaskanal ist ein von einer Kühlflüssigkeit durchströmter Wärmetauscher zum Kühlen des durchfließenden Abgasstromes angeordnet. Der zweite Abgaskanal führt am Wärmetauscher vorbei direkt zu der Abgasausleitung des Abgaswärmetauschers. Gemäß der Erfindung ist das Schaltventil in Abhängigkeit der Temperatur der Kühlflüssigkeit der Brennkraftmaschine geschaltet,
wobei die Kühlflüssigkeit des Wärmetauschers insbesondere auch die Kühlflüssigkeit der Brennkraftmaschine ist.

Das Schalten in Abhängigkeit der Temperatur der Kühlflüssigkeit der Brennkraftmaschine ermöglicht es in einfacher Weise das Schalten des Schaltventils in Abhängigkeit der Temperatur der Brennkraftmaschine durchzuführen.

Gemäß einer vorteilhaften Ausgestaltung der Erfindung ist hierzu ein Thermostat vorgesehen, wobei die Kühlflüssigkeit den Thermostat umströmt. Der Thermostat erzeugt dabei vorzugsweise direkt die Stellbewegung für das Schaltventil. Hierzu kann es insbesondere vorgesehen sein, dass ein Thermostatsteller einen linearen, axialen Hub ausführt. Weiter entspricht es vorteilhafter Ausgestaltung, wenn der Thermostat im Kühlflüssigkeitskreislauf stromabwärts des Wärmetauschers des ersten Abgaskanals angeordnet ist. Der Hub des Thermostatsteller ist entsprechend dem für das Schalten des Schaltventils erforderlichen Schaltweges des Ventilstellers zu wählen. Der Thermostatsteller muss dabei in der Lage sein eine Betätigung des Schaltventils vorzunehmen, die den gesamten Bereich zwischen den beiden Betätigungsendlagen umfasst. Dies kann insbesondere bei einem Hub des Thermostatstellers, der in einem Bereich der Größenordnung von 8 bis 16 mm, vorzugsweise um 12 mm liegt, gegeben sein.

Das Umströmen des Thermostaten durch die Kühlflüssigkeit ermöglicht es in vorteilhafter Weise auf ein Messeinrichtung zum Messen der Kühlwassertemperatur und eine Steuereinrichtung mit einem fremdkraftbetätigten Steller zu verzichten. Dies stellt eine einfache und besonders kostengünstige Bauweise dar, die auch wenige mögliche Fehlerquellen und damit eine geringe Ausfallrate auch im Langzeitbetrieb aufweist. Die Bauweise ist vorteilhafter weise besonders so ausgebildet, dass der Thermostat von der Kühlflüssigkeit umströmt ist.

Das Schalten des Schaltventils durch den Thermostaten kann vorteilhafter Weise gegen die Wirkung einer Rückstellfeder erfolgen. Ausgestaltungen der Erfindung sehen dabei vor dass die von der Rückstellfeder aufgebrachte Federkraft im Bereich von wenigstens 40 N bis 50 N liegt. Die Federkraft ist dabei so zu bestimmen, dass von dem Thermostaten gegen die Wirkung der Rückstellfeder eine Betätigungskraft aufgebracht werden kann, die in der Lage ist, das Schaltventil bis zur Betätigungsendlage zu betätigen, während andererseits die Feder hinreichend vorgespannt sein muss, um das Rückführen in die Betätigungsausgangslage zu gewährleisten.

Gemäß einer weiterführenden Ausgestaltung der Erfindung erfolgt das Durchströmen des Ventilkopfes, der fluidisch von dem vom Abgasstrom durchströmten Kammerbereich des Schaltventils getrennt ist, zum Kühlen des Ventilkopfes. Dieses Kühlen ist deshalb von Vorteil, weil dadurch das gesamte Ventilgehäuse, das vorzugsweise aus einem metallischen Werkstoff hergestellt ist, einer geringeren thermischen Belastung ausgesetzt ist. Darüber hinaus sind auch im Bereich des Ventilkopfes angeordnete Bauteile und Bauelemente vor thermischer Beschädigung geschützt, dies betrifft insbesondere auch im Bereich des Ventilkopfes angeordnete Steller und Steuergeräte. Insbesondere dann, wenn das Schaltventil durch einen getrennten, wie einem pneumatischen Steller mit einer Unterdruckdose betätigt wird ist der Schutz vor Überhitzung, auch durch Strahlungswärme ein Vorteil. Eine besonders günstige Ausführungsform einer Flüssigkeitskühlung des Ventilkopfes liegt dann vor, wenn die Kühlflüssigkeit des Wärmetauschers auch das Schaltventil durchströmt. Dabei liegt das Schaltventil insbesondere stromabwärts des Wärmetauschers im Kreislauf der Kühlflüssigkeit.

Eine günstige Form der Ausgestaltung eines Schaltventil ist gegeben, wenn das Schaltventil ein Ventilgehäuse aufweist, in dem ein Tellerventil als Stellelement angeordnet ist, wobei das Tellerventil aus einem Ventilteller und einem davon abragenden Ventilschaft besteht. Der Thermostat wirkt dabei unmittelbar auf den Ventilschaft ein. Der Ventilschaft dient der Übertragung der erfolgenden Betätigung, während der Ventilteller dem Abdecken und Freigeben von Strömungspfaden im Ventilgehäuse dient. Zum Verhindern von Rußablagerungen im vom Ventilsteller bestrichenen Bewegungsraum des Ventilgehäuses kann der Ventilteller mechanisch bearbeitete, wie insbebesondere geschliffene, Kanten aufweisen. Abbrand von am Ventilteller abgelagertem Ruß, kann dadurch gefördert werden, dass der Ventilteller und ggf. auch dem Abgasstrom ausgesetzte Bereiche des Ventilschafts eine katalytische Beschichtung aufweisen, die den Abbrand des Rußes fördern, indem die für den Abbrand erforderliche Selbstentzündungstemperatur herabgesetzt wird.

Eine weitere vorteilhafte Ausgestaltung betrifft die Anordnung des Thermostaten bezüglich dem schaltbaren Abgaswärmetauscher bzw. bezüglich dem Ventilgehäuse. Hier führt es zu einer besonders kompakten und kostengünstigen Bauweise, wenn der Thermostat in einer Kappe angeordnet ist, die auch zugleich die Austrittsöffnung für die Kühlflüssigkeit aufweist. Die Kappe dient dabei auch zum Abschließen des kühlflüssigkeitsführenden Abschnitts des Ventilgehäuses. Dies ist insbesondere dann von Vorteil, wenn der Ventilkopfbereich von Kühlflüssigkeit durchströmt wird. Der schaltbare Abgaswärmetauscher ist hinsichtlich der Verwendung in unterschiedlichen Einbaulagen und Einbaubedingungen bei unterschiedlichen Fahrzeugen besonders variabel, wenn die Kappe gegenüber dem Gehäuse drehbar gehalten ist. Dann kann durch Verdrehen der Kappe gegenüber dem Ventilgehäuse die Richtung der Austrittsöffnung der Kühlflüssigkeit beliebig verändert und somit an unterschiedliche Verhältnisse angepasst werden, ohne dass andere Bauteile verwendet werden müssen.

Eine Ausgestaltung der Erfindung sieht vor, dass das Schaltventil als sogenanntes Kippventil ausgeführt ist, das wahlweise einen von zwei möglichen Schaltzuständen einnimmt. Entweder ist der erste Abgaskanal mit der Abgaszufuhrleitung fluidisch verbunden und gleichzeitig der zweite Abgaskanal fluidisch von der Abgaszufuhrleitung getrennt oder umgekehrt. Das Umschalten des Kippventils erfolgt dabei durch entsprechende Betätigung des Ventilstellers in Abhängigkeit der Temperatur der Kühlflüssigkeit.

Eine andere Ausgestaltung der Erfindung sieht die vor, dass das Schaltventil über einen gewissen Schaltbereich hinweg als Proportionalventil ausgebildet ist. Durch die Ausgestaltung wird es ermöglicht, jeweils einen Teilstrom durch den zweiten und ersten Abgaskanal durchzuleiten. Somit entsteht beim Schalten des Schaltventils kein sprunghafter sondern ein kontinuierlicher Übergang.

Gemäß bevorzugter Ausgestaltung sowohl eines Kippventils als auch eines Proportionalventils durchströmt der Abgasstrom den zweiten Abgaskanal, solange die Temperatur der Kühlflüssigkeit der Brennkraftmaschine unterhalb einer Schaltschwelle liegt. Die Schaltschwelle kann insbesondere empirisch im Hinblick auf die Abgaskonditionierung, den Abgasverbrauch und weitere Betriebsparameter der Brennkraftmaschine bestimmt werden. Die experimentelle Bestimmung kann insbesondere auf Motorenprüfständen erfolgen. Werte für die Schaltschwelle liegen dabei insbesondere im Bereich zwischen der Kaltstarttemperatur und der Soll-Betriebstemperatur der Kühlflüssigkeit der Brennkraftmaschine. Bei einem Kippventil wird bei einer solchen Ausgestaltung oberhalb der Schaltschwelle ausschließlich der erste Abgaskanal durchströmt. Bei einem Proportionalventil nimmt oberhalb der Schaltschwelle mit weiter steigender Temperatur der Kühlflüssigkeit der Brennkraftmaschine der Anteil des durch den ersten Abgaskanal strömenden Abgasteilstromes zu.

Bei einem Proportionalventil ist darüber hinaus eine Schaltgrenze zu bestimmen, bei die Betätigungsendlage erreicht wird, und oberhalb derer der gesamte Abgasstrom durch den ersten Abgaskanal strömt und somit im Wärmetauscher abgekühlt wird. Auch die Schaltgrenze wird vorzugsweise empirisch, insbesondere auf dem Motorprüfstand unter Berücksichtigung entsprechender Optimierungskriterien ermittelt. Dabei kann die Schaltgrenze insbesondere um ungefähr 10°C oberhalb der Schaltschwelle liegen.

Durch entsprechende Gestaltung des Ventilstellers kann neben dem Schalten zwischen den Abgaskanälen auch ein Regeln des Abgasstromes durch den Abgaswärmetauscher erfolgen, was ein gesondertes Regelventil einspart. Hierzu muss der Ventilsteller zusätzlich in der Lage sein, Teilflächen der Abgaszufuhrleitung abzudecken und daher durch Verringerung oder komplettes Abdecken der zur Verfügung stehenden Anströmfläche den durchfließenden Volumenstrom zu begrenzen oder auf Null zu reduzieren. Dies kann insbesondere durch geeignete Auswahl der Dicke des Ventiltellers über den Umfang des Ventiltellers hinweg erfolgen. Hierdurch kann unter Umständen eine Einschränkung der gleichzeitigen Funktionalität als Proportionalventil bedingt sein.

Ein weiterer erfindungsgemäßer schaltbarer Abgaswärmetauscher weist eine Abgaszufuhrleitung und eine Abgasausleitung für einen Abgasstrom auf. Es ist ein erster und ein zweiter Abgaskanal und ein Schaltventil zum Schalten des Abgasstromes zwischen den Abgaskanälen vorgesehen. Im ersten Abgaskanal ist ein von einer Kühlflüssigkeit durchströmter Wärmetauscher zum Kühlen des durchfließenden Abgasstromes angeordnet. Der zweite Abgaskanal führt am Wärmetauscher vorbei direkt zu der Abgasausleitung des Abgaswärmetauschers. Gemäß der Erfindung sind die beiden Abgaskanäle in einem gemeinsamen Gehäuse angeordnet und durch einen Luftspalt voneinander getrennt.

Eine solche Ausgestaltung eines schaltbaren Abgaswärmetauschers hat den Vorteil einer kompakten, nahezu gekapselten Bauweise. Eine einfache, kostengünstige Montierbarkeit mit wenigen Anschlussstellen und gleichzeitig einem hohen Schutz der Komponenten vor Beschädigung ist gewährleistet. Insbesondere ist die Zulieferung einer solchen Baueinheit und die Montage am Motorblock oder im Motorraum der Brennkraftmaschine bzw. des entsprechenden Fahrzeugs besonders einfach.

Gemäß einer vorteilhaften Ausgestaltung eines solchen schaltbaren Abgaswärmetauschers wird der zweite Abgaskanal aus einem Innenrohr gebildet, das nur einseitig befestigt ist. Der Abgasstrom durchströmt den inneren Hohlraum des Innenrohres. Die Befestigung des Innenrohres erfolgt insbesondere unmittelbar am Ventilgehäuse des Schaltventils. Eine besonders dauerhafte Befestigung ist ein Verschweißen, wobei die Schweißnaht vorzugsweise fluiddicht ausgebildet wird, so dass auf weitere Dichtmittel in diesem Bereich, der aufgrund des durchströmenden Abgasstroms thermisch auch hoch belastet ist, verzichtet werden kann. ES können neben dem Schweißen aber auch andere Fügeverfahren verwendet werde, wie das Löten etc. Das andere freie Ende des Innenrohres ragt zur Abgasausleitung hin ab. Das freie Abragen des Innenrohres ermöglicht diesem ohne Erzeugen mechanischer Spannungen eine thermische Ausdehnung bei der Erwärmung. Durch diese Maßnahme wird eine hohe Dauerhaltbarkeit des Innenrohres gewährleistet ohne dass die Gefahr einer Rissbildung in der Wand des Innenrohres aufgrund der thermischen Belastung entsteht. Dabei ist zu beachten, dass die thermische Belastung des zweiten Abgaskanals gegenüber der des ersten Abgaskanals wesentlich höher ist, da in diesem keine Kühlung des durchströmenden Abgasstromes erfolgt.

Das Innenrohr ist dabei vorteilhafter Weise mittels wenigstens einem außenseitigen Abstützelement gegenüber umliegenden Bauteilen abgestützt. Auf diese Weise ist sichergestellt, dass zwischen dem Innenrohr und umliegenden Bauteilen ein Luftspalt vorhanden ist und eine thermische Isolierung des Innenrohres von den anderen Bauteilen durch den Luftspalt gewährleistet ist.

Vorzugsweise ist ein Abstützelement im letzten Drittel, vorzugsweise im letzten Viertel des Abgasrohres vor dem freien Ende angeordnet. Sie können aber auch eine andere Anordnung aufweisen. Umliegende Bauteile sind dabei insbesondere der erste Abgaskanal sowie das Gehäuse des schaltbaren Abgaswärmetauschers. Zur Minimierung der Wärmeleitung von dem Innenrohr über das Abstützelement an andere Bauteile wird die Zahl der Abstützelemente möglichst gering gewählt. Es ist insbesondere nur ein Abstützelement vorgesehen. Darüber hinaus wird die Kontaktfläche, also die Materialstärke des Abstützelements, zwischen Abstützelement und Innenrohr oder zwischen Abstützelement und anderen Bauteilen, möglichst klein gehalten. Auch geeignete Materialauswahl für das Abstützelement kann verhindern, dass das Abstützelement zu einer zu großen Wärmebrücke wird.

Bei dem wenigstens einen außenseitigen Abstützelement kann es sich insbesondere um einen umlaufenden oder teilweise umlaufenden Abstützrahmen handeln, der das Innenrohr umschließt. Der Abstützrahmen ist dabei insbesondere nur einseitig befestigt, das heißt entweder am Innenrohr oder aber an einem oder mehreren anderen Bauteilen, nicht jedoch an beiden gleichzeitig. Auch diese Maßnahme hat den Zweck, Wärmeausdehnung insbesondre des Innenrohres vor allem in axialer Richtung desselben gegenüber anderen Bauteilen, wie gegenüber dem Gehäuse zu ermöglichen.

Das Befestigen des Abstützrahmens erfolgt gemäß vorteilhafter Ausgestaltung durch Verschweißen an der Außenseite des Innenrohrs. Vorzugsweise erfolgt das Verschweißen nicht in einer kontinuierlichen ununterbrochenen Schweißnaht. Es ist nicht erforderlich, dass die Schweißverbindung fluiddicht ausgebildet ist, da dieser Abschnitt nicht vom dem Abgasstrom ausgesetzt ist. Insbesondere erfolgt das Verschweißen nur über eine Teillänge der Kontaktlinie zwischen Innenrohr und Abstützrahmen.

Gemäß einer bevorzugten Ausgestaltung erfindungsgemäßer schaltbarer Abgaswärmetauscher ist ein fluiddichtes Gehäuse vorgesehen, in dem der erste und der zweite Abgaskanal angeordnet sind. Im Gehäuse ist ein Abgaskollektorraum ausgebildet, der zur Abgasausleitung führt. Die beiden Abgaskanäle münden in den Abgaskollektorraum. Durch diese Konstruktion wird zum einen ein einfach zu montierender Übergang von den beiden Abgaskanälen in die gemeinsame Abgasausleitung gebildet, andererseits wird durch diesen Abgaskollektorraum auch eine gewisse Entkopplung der beiden Abgaskanäle von stromabwärtsliegenden des Abgaswärmetauschers in der Abgasleitung liegenden Elementen erreicht. Hierbei ist es vor allem vorteilhaft, wenn die beiden Abgaskanäle die gleiche Länge aufweisen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Weitere vorteilhafte Ausgestaltungen der Erfindung können auch den Ansprüchen entnommen werden.

Die Erfindung ist anhand der in der Zeichnung gezeigten Ausführungsbeispiele dargestellt und wird im Folgenden unter Bezugnahme auf die Zeichnung ausführlich beschrieben; dabei zeigt:
- Figur 1 und 2: teilgeschnittene Darstellungen eine ersten Ausführungsform eines erfindungsgemäßen schaltbaren Abgaswärmetauschers in zwei unterschiedlichen Schaltstellungen;
- Figur 3: eine vergrößerte teilgeschnittene Darstellung der ersten Ausführungsform im Bereich des Schaltventils;
- Figur 4 und 5: teilgeschnittene Darstellungen eine zweiten Ausführungsform eines erfindungsgemäßen schaltbaren Abgaswärmetauschers in zwei unterschiedlichen Schaltstellungen;
- Figur 6: eine vergrößerte teilgeschnittene Darstellung der weiten Ausführungsform im Bereich des Schaltventils; und
- Figur 7 bis 12: perspektivische Ansichten des Aufbau eines erfindungsgemäßen schaltbaren Abgaswärmetauschers in unterschiedliche Schritte der Montage.

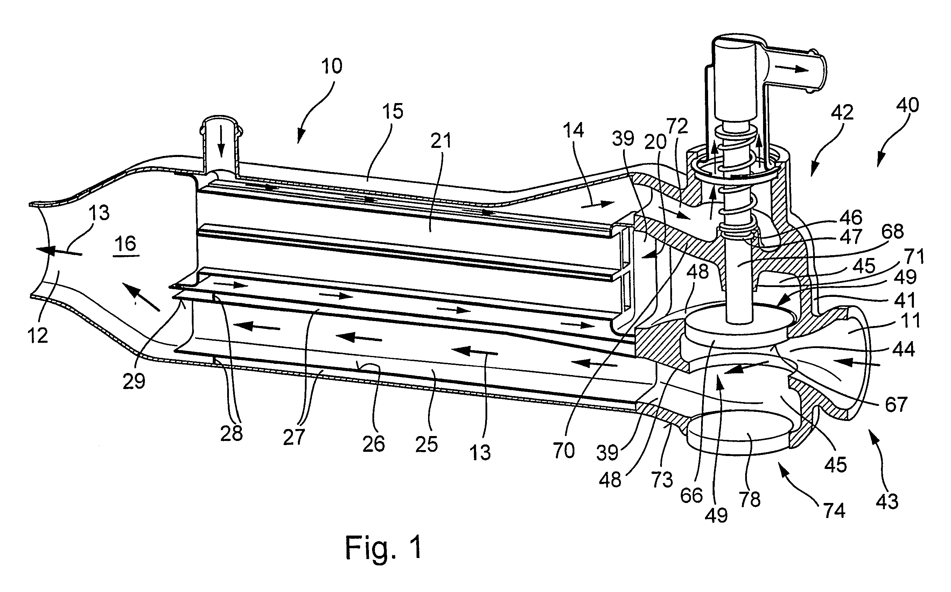

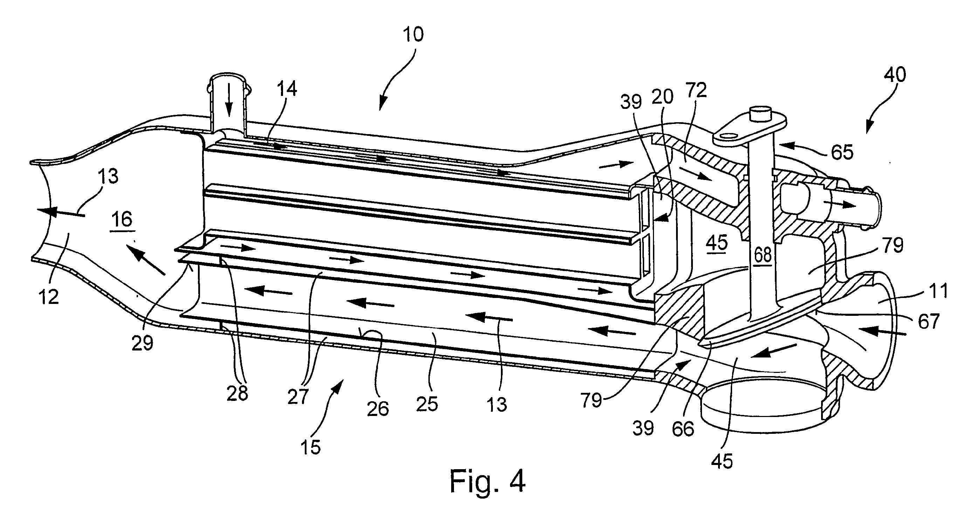

In den Figuren 1 bis 3 und in den Figuren 4 bis 6 sind Schnittdarstellungen zweier Ausführungsformen erfindungsgemäßer schaltbarer Abgaswärmetauscher dargestellt. Dabei findet bei der ersten Ausführungsform ein Schaltventil mit axialem Hub des Ventilstellers Verwendung, der mittels einem im Kopf des Ventilstellers angeordneten Thermostaten betätigt wird. In der zweiten Ausführungsform wird der Ventilsteller das Schaltventils durch axiales Verdrehen um seine Mittelachse betätigt, wobei zur Betätigung des Ventilstellers ein fremdkraftbetätigtes Betätigungselement in Form einer Unterdruckdose dient. Selbstverständlich ist es durchaus möglich auch einen Ventilsteller mit axialem Hub in Verbindung mit einem fremdkraftbetätigten Betätigungselement des Schaltelements oder einen um eine Achse drehbaren Ventilsteller der durch einen Thermostaten betätigt wird vorzusehen.

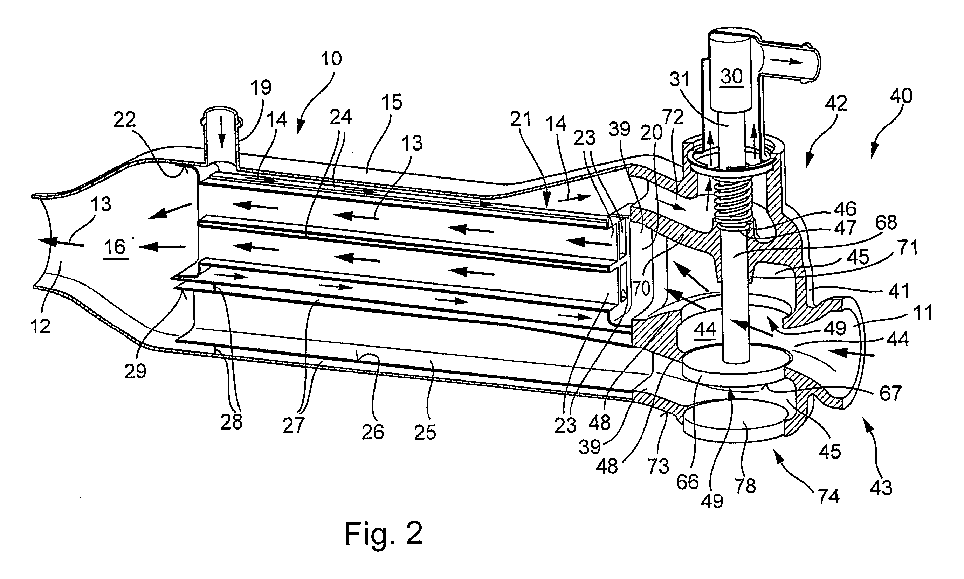

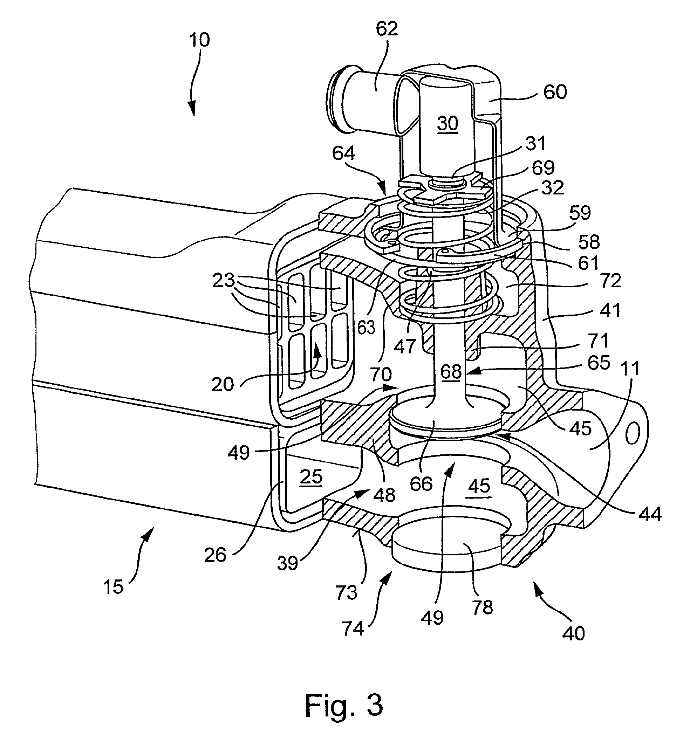

Die Figuren 1 und 2 bzw. die Figuren 3 und 4 zeigen, falls es sich bei dem Schaltventil um ein Kippventil handelt, dabei die Schaltstellungen des Kippventils, wobei in der Figur 1 und in der Figur 3 jeweils die Schaltstellung dargestellt ist, in welcher der Abgasstrom ausschließlich den zweite Abgaskanal durchströmt, während in der Figur 2 und der Figur 4 jeweils die Schaltstellung dargestellt ist, in welcher der Abgasstrom ausschließlich den ersten Abgaskanal durchströmt. Handelt es sich bei dem Schaltventil um ein Proportionalventil, so sind in den Figuren 1 und 3 jeweils die Betätigungsausgangslage und in den Figuren 2 und 4 jeweils die Betätigungsendlagen des Proportionalventils dargestellt. Auf die Darstellung einer Zwischenstellung des Proportionalventils, bei der jeweils ein Teilstrom des Abgasstromes den ersten und den zweiten Abgaskanal durchströmt wurde verzichtet.

Die Figuren 1 bis 3 zeigen in teilgeschnittener Darstellung eine erste Ausführungsform eines schaltbaren Abgaswärmetauschers 10. Der Abgaswärmetauscher weist ein Gehäuse 15 auf, das sich unmittelbar an ein Schaltventil 40 anschließt.

Die Abgaszufuhrleitung 11 mündet in das Ventilgehäuse 41 des Schaltventils 40. Im Inneren des Schaltventils 40 gelangt der mit den Pfeilen 13 dargestellte Abgasstrom zunächst in die mittlere Kammer 44. Die mittlere Kammer 44 ist jeweils durch eine Trennwand 48 von den beiden äußeren Kammern 45 getrennt, wobei die Trennwände 48 jeweils eine Durchströmöffnung 49 aufweisen. Im dargestellten Ausführungsbeispiel sind die drei Kammern 44, 45 vertikal übereinander angeordnet, dabei mündet die obere der beiden äußeren Kammern 45 im ersten Abgaskanal 20, die untere der beiden äußeren Kammern im 45 zweiten Abgaskanal 25. Die Durchströmöffnungen 49 sind fluchtend zueinander angeordnet. Der von den drei Kammern 44, 45 gebildete Ventilkammerbereich 43 ist oberhalb der oberen der beiden äußeren Kammern 45 durch die Zwischenwand 70 von dem Ventilkopfbereich 42 abgetrennt. An der Zwischenwand 70 ist ein Führungsrohr 71 koaxial zu den Durchströmöffnungen 49 ausgebildet, das die Zwischenwand 70 durchsetzt und oberhalb der Zwischenwand 70 in eine im Ventilkopf ausgebildete von der Kühlflüssigkeit 14 durchströmten Wasserkammer 72 mündet.

Durch das Führungsrohr 71 geführt ragt der Ventilschaft 68 eines Tellerventils 65 bis in die mittlere Kammer 44 hinein. Dabei ist in dem Führungsrohr 71 eine Ringnut 46 ausgebildet in dem eine Dichtung 47 angeordnet ist. Die Ringnut 46 ist dabei in dem Teil des Rührungsrohres 71 angeordnet, der von der Wasserkammer 72 umgeben und daher von der Kühlflüssigkeit gekühlt ist. Die Dichtung 47 in der Ringnut 46 trennt die Wasserkammer 72 fluiddicht gegenüber der oberen äußeren Kammer 45 ab, es können weder Abgase in die Wasserkammer 72 strömen noch kann Kühlflüssigkeit aus der Wasserkammer 72 in die Kammern 44, 45 des Ventilkammerbereichs 43 des Schaltventils 40 gelangen. Das radiale Spiel des Ventilschafts 68 in dem Führungsrohr 71 wird möglichst gering gewählt, ein Verklemmen des Ventilschafts 68 im Führungsrohr 71 muss aber zuverlässig verhindert sein.

Der Ventilteller 66 des Tellerventils 65 ist geeignet, die Durchströmöffnungen 49 in den Trennwänden 48 für den Abgasstrom fluiddicht zu verschließen. Hierzu kann der Ventilteller 66 geschliffene Kanten 67 aufweisen, die so den Rand der Durchströmöffnungen 49 bestreichen, dass Rußablagerungen in diesem Bereich abgestreift werden. Der Ventilteller 66 weist insbesondere einen Außendurchmesser auf, welcher der lichten Weite der Durchströmöffnungen 49 entspricht. Der Ventilteller 66 kann damit in die Durchströmöffnungen 49 eintauchen und so den durch die jeweilige Durchströmöffnung 49 gebildeten Strömungspfad verschließen. An der Unterseite 73 des Ventilgehäuses 41 ist eine Einführöffnung 74 ausgebildet, die es erlaubt, das Tellerventil 65 in das Ventilgehäuse 41 einzuführen. Nach dem Einführen des Tellerventils 65 wird die Einführöffnung 74 durch einen Verschluss 78 verschlossen.

Befindet sich das Tellerventil 65 in der in Figur 1 dargestellten Betätigungsausgangslage, so ist die Durchströmöffnung 49 zwischen der mittleren Kammer 44 und der äußeren Kammer 45, die in den ersten Abgaskanal 20 mündet, verschlossen. Der durch die Pfeile 13 dargestellte Abgasstrom fließt daher in die in den zweiten Abgaskanal 25. Der zweite Abgaskanal 25 wird von dem Innenrohr 26 begrenzt, das fluiddicht am Ventilgehäuse 41 angeschweißt ist, so dass die Mündungsöffnung 39 der äußeren Kammer 45 in dem Ventilgehäuse 41 in das Innenrohr 26 fluiddicht umschlossen wird. Das Innenrohr 26 ragt frei in das Innere des Gehäuses 15 hinein und mündet mit seinem freien Ende 29 in dem Abgaskollektorraum 16. Dabei ist das Innenrohr 16 in der Nähe des freien Endes 29 über den am Innenrohr 16 befestigten, dieses allseits umschließenden Abstützrahmen 28 gegenüber dem Gehäuse 15 und gegenüber dem ersten Abgaskanal 20 so abgestützt, dass allseits ein Luftspalt 27 gegeben ist, der das Innenrohr von der Umgebung thermisch isoliert. Das Innenrohr 16 und somit der zweite Abgaskanal 25 weist dabei einen rechteckigen Querschnitt auf, die rechteckige Querschnittsform kann auch beim ersten Abgaskanal gegeben sein, so dass auch das Gehäuse 15 einen rechteckigen Querschnitt aufweisen kann. Die rechteckige Querschnittsform ermöglicht eine kompakte, raumsparende Bauform. Vom Abgaskollektorraum 16 strömt der Abgasstrom dann durch in die Abgasausleitung 12 des schaltbaren Abgaswärmetauschers 10 und von dort an weiter, im Falle einer Abgasrückführung bei einer Brennkraftmaschine zum Frischluftansaugtrakt der Brennkraftmaschine.

Befindet sich das Tellerventil 65 in der in Figur 2 dargestellten Betätigungsendlage, so ist die Durchströmöffnung 49 zwischen der mittleren Kammer 44 und der äußeren Kammer 45, die in den zweiten Abgaskanal 25 mündet, verschlossen. Der durch die Pfeile 13 dargestellte Abgasstrom fließt daher in die in den ersten Abgaskanal 20. Der Betätigungsweg zwischen der Betätigungsausgangslage und der Betätigungsendlage ist ein axialer Hub, der insbesondere im Bereich von 8 bis 16 mm liegt und beispielsweise um 12 mm beträgt. Der erforderliche axiale Hub wird im wesentlichen durch die Abmaße der mittleren Kammer 44 bestimmt. Im ersten Abgaskanal 20 ist der Wärmetauscher 21 angeordnet, es handelt sich um einen Gegenstromwärmetauscher. Die Abgase durchströmen den Abgaswärmetauscher durch die Gaskanäle 23, die jeweils benachbart zu beziehungsweise umgeben von kühlflüssigkeitsdurchströmten Wasserkanälen 24 sind. Der durch die Pfeile 14 dargestellte Strom der Kühlflüssigkeit führt, entgegen dem durch die Pfeile 13 dargestellten Abgasstrom, von dem Wasseranschlussstutzen 19 des Wärmetauschers 21 zu der Wasserkammer 72 im Ventilkopf 42. Beim Durchströmen des Wärmetauschers 21 wird der Abgasstrom abgekühlt.

Der Wärmetauscher 21 und damit der erste Abgaskanal 20 endet mit dem Abgaskanalende 22, dabei weist der erste Abgaskanal 20 die gleiche Länge wie der zweite Abgaskanal 25 auf. Auch der erste Abgaskanal 20 mündet in dem Abgaskollektorraum 16. Der im ersten Abgaskanal 20 abgekühlte Abgasstrom verlässt den schaltbaren Abgaswärmetauscher 10 durch die Abgasausleitung 12.

Der vom Wärmetauscher 21 kommende, durch die Pfeile 14 dargestellte Kühlflüssigkeitsstrom wird in die Wasserkammer 72 des Ventilkopfes 42 eingeleitet. Er kühlt dort das Ventilgehäuse 41 und insbesondere das Führungsrohr 71 mit der in der Ringnut 46 angeordneten Dichtung 47. Durch diese Maßnahme ist das Schaltventil 40 als solches vor thermischer Überhitzung geschützt. Unabhängig davon, ob der erste Abgaskanal 20 vom Abgasstrom durchströmt wird, oder nicht, fließt der Kühlflüssigkeitsstrom durch den Ventilkopf 42. In dem Ventilkopf ist die Ventilkopföffnung 64 ausgebildet, die wiederum koaxial zu den Durchströmöffnungen 49 und dem Führungsrohr 71 ist. Die Ventilkopföffnung 64 wird durch die Kappe 60 verschlossen, an welcher der Wasseraustrittsstutzen 62 angeformt ist, durch den die Kühlflüssigkeit den schaltbaren Abgaswärmetauscher 10 verlässt und in den restlichen Kühlreislauf der Brennkraftmaschine zurückströmt. Dabei ist der schaltbare Abgaswärmetauscher insbesondere stromabwärts, unmittelbar nach dem Motorblock der Brennkraftmaschine im Kreislauf der Kühlflüssigkeit angeordnet.

Durch das Führungsrohr 71 hindurch ragt der Ventilschaft 68 des Tellerventils 65 in die Wasserkammer 72 hinein. Der Ventilschaft ist im Bereich der Wasserkammer 72 in Kontakt mit der Kühlflüssigkeit und wird dadurch gekühlt. Konzentrisch zum Ventilschaft 68 ist die Rückstellfeder 32 in der Wasserkammer 72 angeordnet. Diese ist einerseits an der Zwischenwand 70 und andererseits an einem am Ventilschaft 68 befestigten Mitnehmer 69 abgestützt, wobei Rückstellfeder 32 und Mitnehmer 69 durch die Ventilkopföffnung eingebracht werden können. Durch die Rückstellfeder 32 wird das Tellerventil 65 in der in Figur 1 und Figur 3 gezeigten Betätigungsausgangslage gehalten. Einer Betätigung des Tellerventils 65 wirkt eine Rückstellkraft entgegen, die mindestens im Bereich von 40 bis 50 N liegt.

Die Kappe 60 verschließt die Ventilkopföffnung 64 fluiddicht. Hierzu ist zwischen Kappe 60 und Ventilkopföffnung 64 insbesondere ein Dichtungsring 63 angeordnet. Darüber hinaus ist die Kappe 60 drehbar am Ventilgehäuse 41 gehalten. Hierzu hintergreift ein radial abragender Ringrand 59 eine ventilgehäuseseitig ausgebildete Befestigungsnut 58. Die Befestigung der Kappe 60 in der Befestigungsnut 58 wird dann über einen ebenfalls in die Befestigungsnut 58 eingreifenden Sprengring 61 gesichert. Dadurch ist eine haltbare, fluiddichte Verbindung zwischen Ventilgehäuse 41 und Kappe 60 geschaffen, die andererseits ein Verschwenken der Kappe und damit ein variables Ausrichten des radial von der Kappe 60 abragenden Wasseraustrittstutzens ermöglicht.

Im Inneren der Kappe ist der Thermostat 30 angeordnet. Der Thermostat 30 betätigt mittels des Thermostatstellers 31 das Tellerventil 65. Der Thermostatsteller 31 führt dabei abhängig von der Temperatur der Kühlflüssigkeit im Kühlkreislauf den für die Betätigung des Tellerventils 65 erforderlichen Ventilhub gegenüber dem in der Kappe 65 gehaltenen Gehäuse des Thermostaten 30 aus. Dieser axiale Ventilhub wird direkt an den Ventilsteller, das Tellerventil 65 des Schaltventils 40 übertragen, da der Thermostatsteller 31 an dem Ventilschaft 68 angreift.

Die Figuren 4 bis 6 unterscheiden sich nur hinsichtlich der Gestaltung des Schaltventils 40 und der Betätigung desselben von der Ausgestaltung der Figuren 1 bis 3. Hinsichtlich der weiteren Ausgestaltung wird auf die Beschreibung der Figuren 1 bis 3 verwiesen.

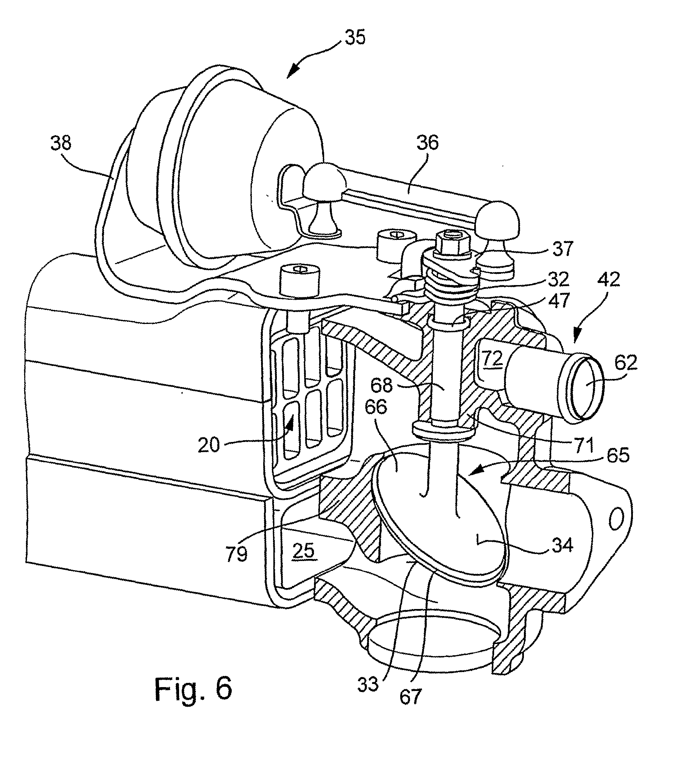

Das Schaltventil 40 gemäß der in den Figuren 4 bis 6 und insbesondere in der Figur 6 weist anstelle eines einen axialen Hub ausführenden Ventilstellers einen Ventilsteller auf, der durch Verdrehen betätigt wird. Hierzu ist ein bezüglich dem Ventilschaft 68 unter einem von 90° verschiedenen Winkel schrägstehender Ventilteller 66 angeordnet. Der Ventilteller ist in einem die mittlere Kammer 44 ersetzenden Schaltring 79 geführt, wobei die geschliffene Kante 67 des Ventiltellers 66 dichtend an einer entsprechend gewölbten, fassförmigen Bauchung anliegt und diese beim Verdrehen des Tellerventils 65 bestreicht. Je nach Drehstellung des Ventiltellers 66 strömt der durch die Abgaszufuhrleitung 11 kommende Abgasstrom die Oberseite 34, von welcher der Ventilschaft 68 abragt, oder die Unterseite 33 des Ventiltellers 66 an. Der Schaltring 79 wird oben und unten durch die Durchströmöffnungen 49 begrenzt, die in die äußeren Kammern 45 münden begrenzt.

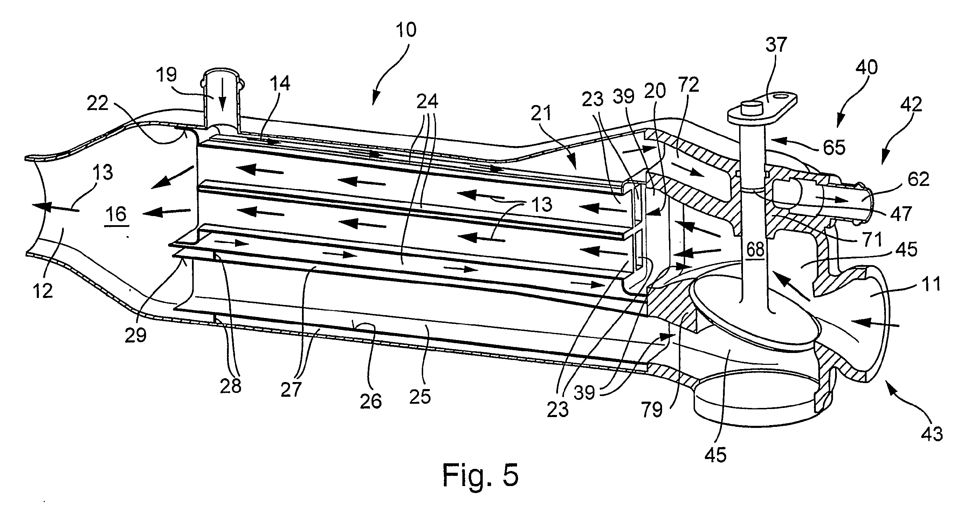

In der Figur 4 ist die Situation dargestellt, in der die Unterseite 33 angeströmt wird. Dadurch, dass die geschliffene Kante 66 an dem Schaltring anliegt wird durch das Ventilteller der Strömungspfad zu dem ersten Abgaskanal 20 versperrt. Der Abgasstrom strömt, wie durch die Pfeile 13 dargestellt in den zweiten Abgaskanal 25. In den Figuren 5 und 6 ist die umgekehrte Situation dargestellt, die Oberseite 34 des Ventiltellers 66 ist der Zufuhrleitung 11 zugewandt. Nun ist der Strömungspfad zum zweiten Abgaskanal 25 versperrt und der Abgasstrom wird durch den ersten Abgaskanal 20 hindurchgeführt.

Bei Zwischenstellungen des Ventils fließt jeweils eine Teilströmung des Abgasstromes die Oberseite 34 und die Unterseite 33 an und wird dementsprechend in den ersten bzw. zweiten Abgaskanal 20 bzw. 25 geleitet. Der Anteil des Abgasstromes, der durch den ersten Abgaskanal 20 strömt ist dabei von der Winkelstellung des Tellerventils 65 gegenüber der Abgaszufuhrleitung 11 abhängig. Die Ausführungsform mit dem Drehventil ist dabei besonders geeignet in Verbindung mit einer kontinuierlichen Verstellung des Abgasstromes zwischen den beiden Abgaskanälen 20, 25 verwendet zu werden. Der Schwenkwinkel des Tellerventils 65 von der Betätigungsausgangslage, die in der Figur 4 dargestellt ist, bis zum Erreichen der Betätigungsendlage, die in Figur 6 dargestellt ist beträgt 180°, jedoch ist es möglich, dass die Schwenkwinkelbereiche zwischen 0° und 30° und zwischen 150° und 180° einen Abgasstrom allein durch den zweiten Abgaskanal bzw. den ersten Abgaskanal führen, so dass diese Stellungen der Betätigungsausgangslage bzw. der Betätigungsendlage entsprechen. Dies ist von der Gestaltung der Breite der Abgaszufuhrleitung 11 am Ventilgehäuse 41 abhängig.

Der Ventilschaft 68 des Tellerventils 65 wird aus der oberen der beiden äußeren Kammern 45 durch ein Führungsrohr 71 herausgeführt, wobei das Führungsrohr 72 eine von der Kühlflüssigkeit durchströmte Wasserkammer 72 im Ventilkopf 42 durchsetzt. Im Führungsrohr 71 ist im Bereich der Wasserkammer 72 oder oberhalb davon eine Dichtung 47 angeordnet, die einen Abgasnebenstrom durch das Führungsrohr 71 hindurch verhindert. An drei Seiten der Wasserkammer 72 können Austrittsöffnungen 62 angebracht sein, von denen zwei verschlossen sind und eine zur Zurückführung der Kühlflüssigkeit in den Kühlflüssigkeitskreislauf der Brennkraftmaschine dienen.

Außen am Ventilgehäuse 41 ist die Haltekonsole 38 angelenkt. An der Haltekonsole 38 ist die Unterdruckdose 35 befestigt. Die Unterdruckdose betätigt über eine Schubstange 36 und den seitlich vom Ventilschaft 68 abragenden Schwenkhebel 37 das Tellerventil 65 und verschwenkt dieses entgegen der Wirkung der Rückstellfeder 32 um den Ventilschaft 68 herum. Durch Ansteuern der Unterdruckdose wird so ein Verstellen des Schaltventils 40 vorgenommen, wobei das Ansteuern in Abhängigkeit der Kühlflüssigkeitstemperatur der Brennkraftmaschine erfolgen kann.

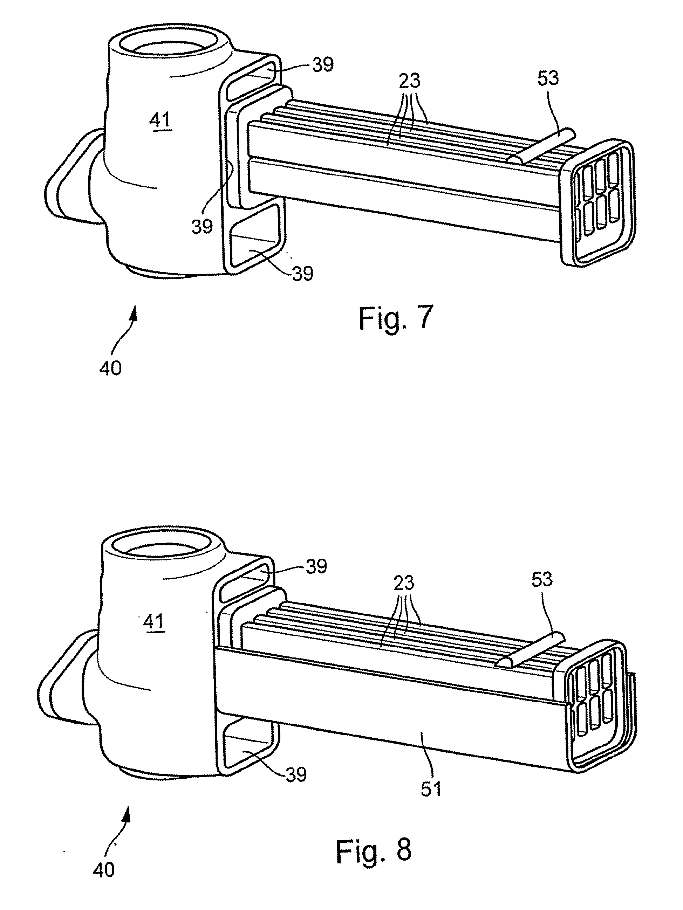

Die Figuren 7 bis 12 zeigen unterschiedliche Abschnitte eines Verfahrens zum Herstellen eins entsprechenden Abgaswärmetauschers 10.

Gemäß dem in der Figur 7 dargestellten Schrittes 1 des Verfahrens wird an das Ventilgehäuse 41 wird im Bereich der Mündung 39 des Ventilgehäuses 41 für den ersten Abgaskanal 20 der Innenkörper des Wärmetauschers 21 fluiddicht angeschweißt. Der Innenkörper beinhaltet die an einem gemeinsamen Rahmen angeordneten, den Wärmetauscher durchsetzenden, aus Rohren gebildeten Gaskanäle 23, die parallel zueinander verlaufen. An der Oberseite der Gaskanäle ist ein Umleitblech 53 angeordnet, das dafür sorgt, dass der Wärmetauscher nicht lediglich vom Kühlflüssigkeitsstrom überströmt wird, sondern ein gleichmäßiges Umströmen der Gaskanäle durch den Kühlflüssigkeitsstrom erfolgt.

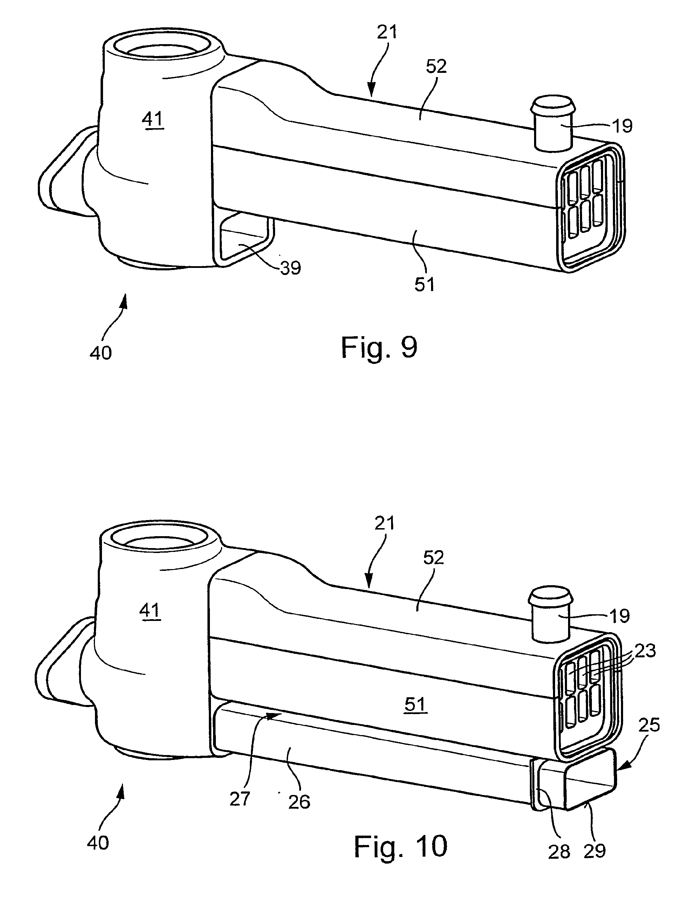

Anschließend wird gemäß dem in der Figur 8 gezeigten Schritt 2 die Unterschale 51 des Wärmetauschers 21 am Ventilgehäuse befestigt. Gemäß dem Schritt 3, Figur 9, des Verfahrens wird die Oberschale 52 mit dem Wasseranschlussstutzen 19 befestigt. Die Oberschale 52 und die Unterschale 51 schließen die von der Kühlflüssigkeit durchströmten Wasserkanäle 24 des Wärmetauschers 21 nach Außen ab. Sie sind fluiddicht miteinander und mit den die Abgasdurchführrohre 50 tragenden endständigen Rahmenverbunden. Das Umleitblech liegt innenseitig an der Oberschale 52 an. Die Öffnung des Ventilgehäuses 41 zur Wasserkammer 72 wird von der Oberschale 52 umschlossen, so dass die Kühlflüssigkeit aus dem Wärmetauscher 21 in die Wasserkammer 72 abströmt. Ober- und Unterschale 52, 51 sind fluiddicht am Ventilgehäuse 41 angeschweißt und bilden einen Teil des Gehäuses 15.

Gemäß dem in der Figur 10 gezeigten Schritt 4 des Verfahrens wird nun das Innenrohr 26, das den zweiten Abgaskanal 25 bildet, fluiddicht um die Mündung des zweiten Abgaskanals am Ventilgehäuse herum angeschweißt. Mit dem am Innenrohr 26 befestigten Abstützrahmen 28 stützt sich das Innenrohr an der Unterschale 51 ab, so dass dazwischen der Luftspalt 27 ausgebildet ist.

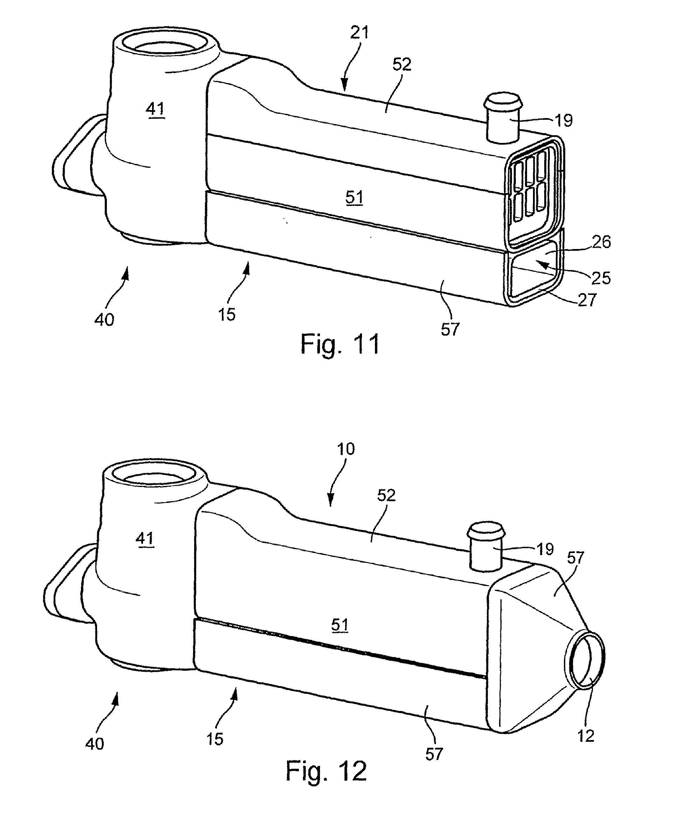

Nun wird gemäß dem in der Figur 11 gezeigten Schritt 5 des Verfahrens die Außenwand 57 aufgesetzt und mit dem Ventilgehäuse 41 und im oberen Bereich mit der Unterschale 51 verbunden. Die Außenwand 57 umschließt das Innenrohr 26 und schließt seitlich zu der Unterschale 41 des Abgaswärmetauscher ab. Das Innenrohr 26 ist sowohl seitlich als auch auf der Unterseite mit dem Abstützrahmen an der Außenwand 57 abgestützt, so dass allseitig ein Luftspalt 27 ausgebildet ist, der das Innenrohr gegenüber der Umgebung isoliert.

Gemäß dem Schritt 6 des Verfahrens, Figur 12, wird dann der axiale Wandabschluss 57 mit der Abgasausleitung 12 an dem vorderen Ende von Außenwand 57, Unterschale 51 und Oberschale 52 fluiddicht verbunden, wodurch das Gehäuse 15 des Abgaswärmetauschers 10 komplettiert ist. In dem Wandabschluss 57 ist der Abgaskollektorraum 16 ausgebildet von dem aus der Abgasstrom durch die Abgasausleitung 12 den nunmehr bis auf den Ventileinsatz im Ventilgehäuse fertiggestellten schaltbaren Abgaswärmetauscher 10 verlässt.

Durch Einsetzen des entsprechenden Ventileinsatzes wird der schaltbare Abgaswärmetauscher komplettiert. Aus dem dargestellten Verfahren ist ersichtlich, dass der Wärmetaucher aus wenigen einfachen Bauteil, die rasch zusammenzusetzen sind montierbar ist. Sämtliche Verbindungen können als Schweißverbindung ausgebildet sein, so dass Dichtungen weitgehende vermieden werden. Es wird ein robustes und dauerhaft haltbares Gebilde erzeugt, das dadurch auch eine hohe Standfestigkeit auch gegen die auftretenden thermischen Belastungen aufweist.

## Patentansprüche

1. Schaltbarer Abgaswärmetauscher mit einer Abgaszufuhrleitung und einer Abgasausleitung für einen Abgasstrom, mit einem ersten und einem zweiten zur Abgasausleitung führenden Abgaskanal und mit einem Schaltventil zum Schalten des Abgasstromes zwischen den Abgaskanälen, wobei im ersten Abgaskanal ein von einer Kühlflüssigkeit durchströmter Wärmetauscher angeordnet ist und der zweite Abgaskanal den Abgasstrom an dem Wärmetauscher vorbei zur Abgasausleitung führt, **dadurch gekennzeichnet, dass** das Schaltventil (40) in Abhängigkeit der Temperatur der Kühlflüssigkeit der Brennkraftmaschine geschaltet ist und einen vom Abgasstrom durchströmten Ventilkammerbereich (43) und einen davon fluidisch getrennten Ventilkopfbereich (42) aufweist, wobei der Ventilkopfbereich (42) von der Kühlflüssigkeit durchströmt ist.

2. Schaltbarer Abgaswärmetauscher nach Anspruch 1, **dadurch gekennzeichnet, dass** die Kühlflüssigkeit einen Thermostat (30) umströmt, wobei das Schalten des Schaltventils (40) durch den Thermostat (30), vorzugsweise durch ein temperaturabhängig einen axialen Hub ausübenden Thermostatsteller (31) des Thermostaten (30) , wobei der Hub vorzugsweise in einem Bereich von 8 bis 16 mm, insbesondere um 12 mm liegt, erfolgt.

3. Schaltbarer Abgaswärmetauscher nach Anspruch 2, **dadurch gekennzeichnet, dass** das Schalten durch den Thermostaten (30) entgegen der Wirkung einer Rückstellfeder (32) erfolgt.

4. Schaltbarer Abgaswärmetauscher nach einem der Ansprüche 2 oder 3, **dadurch gekennzeichnet, dass** in einem Kreislauf der Kühlflüssigkeit der Thermostat (30) stromabwärts des Wärmetauschers (21) angeordnet ist.

5. Schaltbarer Abgaswärmetauscher nach einem der vorhergehenden Ansprüche, **dadurch gekennzeichnet, dass** das Schaltventil (40) als Stellelement eine in einem Ventilgehäuse (41) angeordnetes Tellerventil (65) mit einem Ventilteller (66) und einem vom Ventilteller (66) abragenden Ventilschaft (68) besteht, wobei der Thermostat (30) unmittelbar auf den Ventilschaft (68) einwirkt.

6. Schaltbarer Abgaswärmetauscher nach Anspruch 5, **dadurch gekennzeichnet, dass** wenigstens der Ventilteller (66) des Tellerventils (65) eine katalytische Beschichtung aufweist.

7. Schaltbarer Abgaswärmetauscher nach Anspruch 5 oder 6, **dadurch gekennzeichnet, dass** der Ventilteller (66) mechanisch bearbeitete, wie geschliffene Kanten, aufweist.

8. Schaltbarer Abgaswärmetauscher nach einem der Ansprüche 4 bis 7, **dadurch gekennzeichnet, dass** der Thermostat (30) koaxial zum Ventilschaft (68) des Schaltventils (40) angeordnet ist.

9. Schaltbarer Abgaswärmetauscher nach einem der vorhergehenden Ansprüche, **dadurch gekennzeichnet, dass** der Thermostat (30) unmittelbar an einem Ventilgehäuse (41) des Schaltventils (40) angeordnet ist.

10. Schaltbarer Abgaswärmetauscher nach Anspruch 9, **dadurch gekennzeichnet, dass** der Thermostat (30) in einer das Ventilgehäuse (41) abschließenden Kappe (60) angeordnet ist, wobei die Kappe (60) eine Austrittsöffnung (19) für die Kühlflüssigkeit aufweist.

11. Schaltbarer Abgaswärmetauscher nach Anspruch 10, **dadurch gekennzeichnet, dass** die Kappe (60) drehbar am Ventilgehäuse (41) angeordnet ist, so dass die Richtung der Austrittsöffnung (19) in Drehrichtung ausrichtbar ist, wobei die Kappe (60) gegenüber dem Ventilgehäuse (41) abgedichtet ist und vorzugsweise mittels eines Sprengrings (77) gesichert am Ventilgehäuse (41) befestigt ist.

12. Schaltbarer Abgaswärmetauscher nach einem der vorhergehenden Ansprüche, **dadurch gekennzeichnet, dass** zur fluidischen Trennung von Ventilkammerbereich (43) und Ventilkopf (42) im Ventilgehäuse (41) zwischen Ventilgehäuse (41) und Ventilschaft (68) eine Dichtung (63) vorzugsweise in einer im Ventilgehäuse (41) ausgebildeten Ringnut (46) angeordnet ist.

13. Schaltbarer Abgaswärmetauscher nach einem der vorhergehenden Ansprüche, **dadurch gekennzeichnet, dass** das Schaltventil (40) als Kippventil ausgebildet ist, bei dem alternativ einer der beiden Abgaskanäle (20,25) von dem Abgasstrom durchströmt ist, wobei das Umschalten bei einer vorgegebenen Schaltschwelle erfolgt.

14. Schaltbarer Abgaswärmetauscher nach einem der Ansprüche 1 bis 12, **dadurch gekennzeichnet, dass** das Schaltventil als Proportionalventil ausgebildet ist, wobei insbesondere der Abgasstrom unterhalb einer Schaltschwelle einen der beiden Abgaskanäle, vorzugsweise den zweiten Abgaskanal, oberhalb einer Schaltgrenze den anderen der beiden Abgaskanäle, vorzugsweise den ersten Abgaskanal, und zwischen der Schaltschwelle und der Schaltgrenze zu proportionalen Anteilen beide Abgaskanäle durchströmt.

15. Schaltbarer Abgaswärmetauscher nach Anspruch 13 oder 14, **dadurch gekennzeichnet, dass** die Schaltschwelle zwischen der Kaltstarttemperatur und Betriebstemperatur einer Brennkraftmaschine, deren Abgase den Abgaswärmetauscher (21) durchströmen können, liegt.

16. Schaltbarer Abgaswärmetauscher nach Anspruch 14, **dadurch gekennzeichnet, dass** die Schaltgrenze ungefähr 10°C oberhalb der Schaltschwelle liegt.

17. Schaltbarer Abgaswärmetauscher nach einem der vorhergehenden Ansprüche, **dadurch gekennzeichnet, dass** der erste Abgaskanal (20) und der zweite Abgaskanal (25) in einem gemeinsamen Gehäuse (15) angeordnet und durch einen Luftspalt (27) voneinander getrennt sind.

18. Schaltbarer Abgaswärmetauscher nach Anspruch 17, **dadurch gekennzeichnet, dass** die zweite Abgaskanal (25) aus einem Innenrohr (26) besteht, das nur einseitig, insbesondere direkt an einem Ventilgehäuse (41) des Schaltventils (41), befestigt, insbesondere gasdicht verschweißt ist, wobei das zweite Ende des Innenrohres (26) frei zur Abgasausleitung (12) hin abragt.

19. Schaltbarer Abgaswärmetauscher nach Anspruch 18, **dadurch gekennzeichnet, dass** das Innenrohr (26) über wenigstens ein außenseitiges Abstützelement, insbesondere über wenigstens einen umlaufenden Abstützrahmen (28), gegenüber dem Gehäuse (15) und gegenüber dem ersten Abgaskanal (20) abgestützt ist.

20. Schaltbarer Abgaswärmetauscher nach Anspruch 19, **dadurch gekennzeichnet, dass** das wenigstens eine Abstützelement nur einseitig befestigt ist, wobei das Abstützelement vorzugsweise unlösbar, insbesondere durch Verschweißen vorzugsweise über einen Teil der Anlage des Abstützelements an der Befestigungsstelle befestigt ist.

21. Schaltbarer Abgaswärmetauschen nach Anspruch 20, **dadurch gekennzeichnet, dass** das wenigstens eine Abstützelement am Innenrohr (26) befestigt ist und gegenüber dem Gehäuse (15) bzw. gegenüber dem ersten Abgaskanal (20) axialverschiebbar ist.

22. Schaltbarer Abgaswärmetauscher nach einem der vorhergehenden Ansprüche, **dadurch gekennzeichnet, dass** erster und zweiter Abgaskanal (20,25) gleich lang sind und in einen gemeinsamen Abgaskollektorraum (16) münden, der zur Abgasausleitung (12) führt.

23. Schaltbarer Abgaswärmetauscher nach einem der vorhergehenden Ansprüche, **dadurch gekennzeichnet, dass** wenigstens ein Teil der Abgaskanäle (20,25) einen rechteckigen Querschnitt aufweist.

24. Schaltbarer Abgaswärmetauscher nach einem der vorhergehenden Ansprüche, **dadurch gekennzeichnet, dass** ein den ersten und den zweiten Abgaskanal (20,25) umschließendes Gehäuse (15) am Ventilgehäuse (41) des Schaltventils angeordnet, insbesondere gasdicht angeschweißt ist, wobei das Gehäuse (15) die beiden Abgaskanäle (20,25) aufnimmt und vorzugsweise einen zur Abgasausleitung führendenden Abgaskollektorraum (16) begrenzt.

25. Schaltbarer Abgaswärmetaucher nach einem der vorhergehenden Ansprüche, **dadurch gekennzeichnet, dass** die mit dem Abgasstrom in Kontakt befindlichen Bauteile, wie beispielsweise Gehäuse (15), Ventilgehäuse (41), Ventilschaft (68), Innenrohr (26) aus metallischen Werkstoffen, insbesondere aus Blech sind.

26. Schaltbarer Abgaswärmetauscher nach einem der vorhergehenden Ansprüche, **dadurch gekennzeichnet, dass** das Ventilgehäuse (41) drei nebeneinander ausgebildete (44,45) Kammern aufweist, wobei jede der Kammern (44,45) eine aus dem Ventilgehäuse hinausführende Anschlussöffnung aufweist, wobei eine mittlere Kammer (44) von zwei äußeren Kammern (45) durch je eine Trennwand (48) abgetrennt ist, die jeweils eine Durchströmöffnung (49) aufweist, wobei die Durchströmöffnungen (49) durch den Ventilsteller verschließbar sind, wobei die Anschlussöffnung der mittleren Kammer (44) mit der Abgaszufuhrleitung (11) und jede der beiden äußeren Kammern (45) mit jeweils einem Abgaskanal (20,25) fluidisch verbunden ist.

27. Schaltbarer Abgaswärmetauscher nach einem der vorhergehenden Ansprüche, **dadurch gekennzeichnet, dass** der von einer Kühlflüssigkeit durchströmte Wärmetauscher (21) im Kühlkreislauf der Brennkraftmaschine stromabwärts und insbesondere unmittelbar nach derselben angeordnet ist.

28. Schaltbarer Abgaswärmetauscher nach einem der vorhergehenden Ansprüche, **dadurch gekennzeichnet, dass** die Kühlflüssigkeit des Wärmetauschers (21) die Kühlflüssigkeit der Brennkraftmaschine ist.

## Claims

1. A switchable exhaust gas heat exchanger having an exhaust gas feed line and an exhaust gas discharge for an exhaust gas stream, having a first and a second exhaust gas passage leading to the exhaust gas discharge, and having a switching valve for switching the exhaust gas stream between the exhaust gas passages, a heat exchanger through which a coolant flows being arranged in the first exhaust gas passage and the second exhaust gas passage routing the exhaust gas stream past the heat exchanger to the exhaust gas discharge, **characterized in that** the switching valve (40) is switched as a function of the temperature of the coolant of the internal combustion engine and has a valve chamber region (43), through which the exhaust gas stream flows, and a valve head region (42), which is fluid-separated from the valve chamber region, the coolant flowing through the valve head region (42).

2. The switchable exhaust gas heat exchanger as claimed in claim 1, **characterized in that** the coolant flows around a thermostat (30), the switching valve (40) being switched by the thermostat (30), preferably by a thermostat adjuster (31), which exerts an axial displacement as a function of temperature, of the thermostat (30), the displacement preferably lying in a range from 8 to 16 mm, in particular being around 12 mm.

3. The switchable exhaust gas heat exchanger as claimed in claim 2, **characterized in that** the switching by the thermostat (30) takes place counter to the auction of a restoring spring (32).

4. The switchable exhaust gas heat exchanger as claimed in claim 2 or 3, **characterized in that** in a circuit of the coolant, the thermostat (30) is arranged downstream of the heat exchanger (21).

5. The switchable exhaust gas heat exchanger as claimed in one of the preceding claims, **characterized in that** the switching valve (40), as adjusting element, has a disk valve (65), arranged in a valve housing (41), with a valve disk (66) and a valve stem (68) protruding from the valve disk (66), the thermostat (30) acting directly on the valve stem (68).

6. The switchable exhaust gas heat exchanger as claimed in claim 5, **characterized in that** at least the valve disk (66) of the disk valve (65) has a catalytic coating.

7. The switchable exhaust gas heat exchanger as claimed in claim 5 or 6, **characterized in that** the valve disk (66) has machined, for example ground, edges.

8. The switchable exhaust gas heat exchanger as claimed in one of claims 4 to 7, **characterized in that** the thermostat (30) is arranged coaxially with respect to the valve stem (68) of the switching valve (40).

9. The switchable exhaust gas heat exchanger as claimed in one of the preceding claims, **characterized in that** the thermostat (30) is arranged directly on a valve housing (41) of the switching valve (40).

10. The switchable exhaust gas heat exchanger as claimed in claim 9, **characterized in that** the thermostat (30) is arranged in a cap (60) that closes off the valve housing (41), the cap (60) having an outlet opening (19) for the coolant.

11. The switchable exhaust gas heat exchanger as claimed in claim 10, **characterized in that** the cap (60) is arranged rotatably on the valve housing (41), so that the direction of the outlet opening (19) can be oriented in the direction of rotation, the cap (60) being sealed with respect to the valve housing (41) and preferably being attached to the valve housing (41) such that it is secured by means of a circlip (77).

12. The switchable exhaust gas heat exchanger as claimed in one of the preceding claims, **characterized in that** for fluid separation of valve chamber region (43) and valve head (42) in the valve housing (41), a seal (63) is arranged between valve housing (41) and valve stem (68), preferably in an annular groove (46) formed in the valve housing (41).

13. The switchable exhaust gas heat exchanger as claimed in one of the preceding claims, **characterized in that** the switching valve (40) is designed as a rocker valve in which one of the two exhaust gas passages (20, 25) or the other, as an alternative, has the exhaust gas stream flowing through it, with the switching taking place at a predetermined switching threshold.

14. The switchable exhaust gas heat exchanger as claimed in one of claims 1 to 12, **characterized in that** the switching valve is designed as a proportional control valve, the exhaust gas stream in particular flowing through one of the two exhaust gas passages, preferably the second exhaust gas passage, below a switching threshold and flowing through the other of the two exhaust gas passages, preferably the first exhaust gas passage, above a switching limit, and proportional amounts of the exhaust gas stream flowing through both exhaust gas passages between the switching threshold and the switching limit.

15. The switchable exhaust gas heat exchanger as claimed in claim 13 or 14, **characterized in that** the switching threshold is between the cold-start temperature and operating temperature of an internal combustion engine, the exhaust gases from which are able to flow through the exhaust gas heat exchanger (21).

16. The switchable exhaust gas heat exchanger as claimed in claim 14, **characterized in that** the switching limit is approximately 10°C above the switching threshold.

17. A switchable exhaust gas heat exchanger as claimed in one of the preceding claims, **characterized in that** the first exhaust gas passage (20) and the second exhaust gas passage (25) are arranged in a common housing (15) and are separated from one another by an air gap (27).

18. The switchable exhaust gas heat exchanger as claimed in claim 17, **characterized in that** the second exhaust gas passage (25) comprises an inner tube (26) which is secured, in particular welded in a gastight manner, on just one side, in particular directly to a valve housing (41) of the switching valve (41), the second end of the inner tube (26) protruding freely toward the exhaust gas discharge (12).

19. The switchable exhaust gas heat exchanger as claimed in claim 18, **characterized in that** the inner tube (26) is supported with respect to the housing (15) and with respect to the first exhaust gas passage (20) via at least one outer supporting element, in particular by means of at least one encircling supporting frame (28).

20. The switchable exhaust gas heat exchanger as claimed in claim 19, **characterized in that** the at least one supporting element is attached on just one side, the supporting element being attached preferably nonreleasably, in particular by welding, preferably over part of the bearing contact between the supporting element and the attachment location.

21. The switchable exhaust gas heat exchanger as claimed in claim 20, **characterized in that** the at least one supporting element is attached to the inner tube (26) and is axially displaceable with respect to the housing (15) and/or with respect to the first exhaust gas passage (20).

22. The switchable exhaust gas heat exchanger as claimed in one of the preceding claims, **characterized in that** the first and second exhaust gas passages (20, 25) are of equal lengths and open out into a common exhaust gas collector space (16) which leads to the exhaust gas discharge (12).

23. The switchable exhaust gas heat exchanger as claimed in one of the preceding claims, **characterized in that** at least a proportion of the exhaust gas passages (20, 25) has a rectangular cross section.

24. The switchable exhaust gas heat exchanger as claimed in one of the preceding claims, **characterized in that** a housing (15) which surrounds the first and second exhaust gas passages (20, 25) is arranged, in particular welded in a gastight manner, on the valve housing (41) of the switching valve, the housing (15) accommodating the two exhaust gas passages (20, 25) and preferably delimiting an exhaust gas collector space (16) leading to the exhaust gas discharge.

25. The switchable exhaust gas heat exchanger as claimed in one of the preceding claims, **characterized in that** the components which are in contact with the exhaust gas stream, such as for example the housing (15), valve housing (41), valve stem (68), inner tube (26), are made from metallic materials, in particular from metal sheet.

26. The switchable exhaust gas heat exchanger as claimed in one of the preceding claims, **characterized in that** the valve housing (41) has three chambers (44, 45) formed next to one another, each of the chambers (44, 45) having a connection opening leading out of the valve housing, a middle chamber (44) being separated from two outer chambers (45) by means of in each case one partition (48), each of the partitions having a through-flow opening (49), it being possible for the through-flow openings (49) to be closed off by the valve adjuster, the connection opening of the middle chamber (44) being fluid-connected to the exhaust gas feed line (11) and each of the two outer chambers (45) being fluid-connected to in each case one exhaust gas passage (20, 25).

27. The switchable exhaust gas heat exchanger as claimed in one of the preceding claims, **characterized in that** the heat exchanger (21), through which a coolant flows, in the cooling circuit of the internal combustion engine is arranged downstream, in particular immediately after, the internal combustion engine.

28. The switchable exhaust gas heat exchanger as claimed in one of the preceding claims, **characterized in that** the coolant of the heat exchanger (21) is the engine coolant.

## Revendications

1. Echangeur de chaleur des gaz d'échappement, activable, comprenant une conduite d'alimentation des gaz d'échappement et une conduite de sortie des gaz d'échappement pour un flux de gaz d'échappement, comprenant un premier conduit et un deuxième conduit des gaz d'échappement menant à la conduite de sortie des gaz d'échappement, et une soupape de commande pour le passage du flux de gaz d'échappement entre les conduits des gaz d'échappement, où un échangeur de chaleur, traversé par un liquide de refroidissement, est disposé dans le premier conduit des gaz d'échappement, et le deuxième conduit des gaz d'échappement dirige le flux de gaz d'échappement vers la conduite de sortie des gaz d'échappement, en le faisant passer devant l'échangeur de chaleur,
**caractérisé en ce que** la soupape de commande (40) est activée en fonction de la température du liquide de refroidissement du moteur à combustion interne et présente une zone (43) de la chambre de soupape traversée par le flux de gaz d'échappement et une zone (42) de la tête de soupape séparée fluidiquement de ladite zone de la chambre de soupape, où la zone (42) de la tête de soupape est traversée par le liquide de refroidissement.

2. Echangeur de chaleur des gaz d'échappement, activable, selon la revendication 1, **caractérisé en ce que** le liquide de refroidissement baigne un thermostat (30), où le déclenchement de la soupape de commande (40) se produit sous l'effet du thermostat (30), de préférence sous l'effet d'un organe de commande (31) du thermostat (30) exerçant une course axiale en fonction de la température, où la course se situe, de préférence, dans une plage comprise entre 8 mm et 16 mm, en particulier à peu près égale à 12 mm.

3. Echangeur de chaleur des gaz d'échappement, activable, selon la' revendication 2, **caractérisé en ce que le déclenchement dû au thermostat (30) se produit** en s'opposant à l'effet d'un ressort de rappel (32).

4. Echangeur de chaleur des gaz d'échappement, activable, selon l'une des revendications 2 ou 3, **caractérisé en ce que** le thermostat (30) est disposé, dans un circuit du liquide de refroidissement, en aval de l'échangeur de chaleur (21).

5. Echangeur de chaleur des gaz d'échappement, activable, selon l'une quelconque des revendications précédentes, **caractérisé en ce que** la soupape de commande (40), en tant qu'élément de commande, se compose d'une soupape à disque (65) disposée dans une cage de soupape (41) et comprenant un disque de soupape (66), et d'une tige de soupape (68) dépassant du disque de soupape (66), où le thermostat (30) agit directement sur la tige de soupape (68).

6. Echangeur de chaleur des gaz d'échappement, activable, selon la revendication 5, **caractérisé en ce qu'**au moins le disque de soupape (66) de la soupape à disque (65) présente un revêtement catalytique.

7. Echangeur de chaleur des gaz d'échappement, activable, selon la revendication 5 ou 6, **caractérisé en ce que** le disque de soupape (66) présente des bords usinés mécaniquement, comme polis.

8. Echangeur de chaleur des gaz d'échappement, activable, selon l'une quelconque des revendications 4 à 7, **caractérisé en ce que** le thermostat (30) est disposé de façon coaxiale par rapport à la tige de soupape (68) de la soupape de commande (40).

9. Echangeur de chaleur des gaz d'échappement, activable, selon l'une quelconque des revendications précédentes, **caractérisé en ce que** le thermostat (30) est disposé directement sur une cage de soupape (41) de la soupape de commande (40).

10. Echangeur de chaleur des gaz d'échappement, activable, selon la revendication 9, **caractérisé en ce que** le thermostat (30) est disposé dans une calotte (60) fermant la cage de soupape (41), où la calotte (60) présente une ouverture de sortie (19) pour le liquide de refroidissement.

11. Echangeur de chaleur des gaz d'échappement, activable, selon la revendication 10, **caractérisé en ce que** la calotte (60) est montée en rotation sur la cage de soupape (41), de sorte que la direction de l'ouverture de sortie (19) peut être alignée dans la direction de rotation, où la calotte (60) est rendue étanche par rapport à la cage de soupape (41) et est solidement fixée sur la cage de soupape (41), de préférence au moyen d'un circlips (77).

12. Echangeur de chaleur des gaz d'échappement, activable, selon l'une quelconque des revendications précédentes, **caractérisé en ce qu'**un joint (63), servant à la séparation fluidique de la zone (43) de la chambre de soupape et de la tête de soupape (42), dans la cage de soupape (41), entre la cage de soupape (41) et la tige de soupape (68), est disposé, de préférence, dans une rainure annulaire (46) configurée dans la cage de soupape (41).

13. Echangeur de chaleur des gaz d'échappement, activable, selon l'une quelconque des revendications précédentes, **caractérisé en ce que** la soupape de commande (40) est conçue comme une soupape à bascule dans laquelle l'un des deux conduits des gaz d'échappement (20, 25) est traversé alternativement par le flux de gaz d'échappement, où l'inversion se produit dans le cas d'un seuil de déclenchement prédéfini.

14. Echangeur de chaleur des gaz d'échappement, activable, selon l'une quelconque des revendications 1 à 12, **caractérisé en ce que** la soupape de commande est conçue comme une soupape proportionnelle, où en particulier le flux de gaz d'échappement, au-dessous d'un seuil de déclenchement, traverse l'un des deux conduits des gaz d'échappement, de préférence le deuxième conduit des gaz d'échappement, au-dessus d'une limite de déclenchement traverse l'autre conduit des gaz d'échappement, de préférence le premier conduit des gaz d'échappement, et entre le seuil de déclenchement et la limite de déclenchement traverse les deux conduits des gaz d'échappement suivant des répartitions proportionnelles.

15. Echangeur de chaleur des gaz d'échappement, activable, selon la revendication 13 ou 14, **caractérisé en ce que** le seuil de déclenchement se situe entre la température de démarrage à froid et la température de fonctionnement d'un moteur à combustion interne dont les gaz d'échappement peuvent traverser l'échangeur de chaleur des gaz d'échappement (21).

16. Echangeur de chaleur des gaz d'échappement, activable, selon la revendication 14, **caractérisé en ce que** la limite de déclenchement se situe à peu près à 10°C au-dessus du seuil de déclenchement.

17. Echangeur de chaleur des gaz d'échappement, activable, selon l'une quelconque des revendications précédentes, **caractérisé en ce que** le premier conduit des gaz d'échappement (20) et le deuxième conduit des gaz d'échappement (25) sont disposés dans un carter commun (15) et séparés l'un de l'autre par un espace d'air (27).

18. Echangeur de chaleur des gaz d'échappement, activable, selon la revendication 17, **caractérisé en ce que** le deuxième conduit des gaz d'échappement (25) se compose d'un tube intérieur (26) qui, seulement sur un côté, est fixé en particulier directement sur une cage de soupape (41) de la soupape de commande (40), en particulier soudé de façon étanche aux gaz, où la deuxième extrémité du tube intérieur (26) dépasse librement en direction de la conduite de sortie des gaz d'échappement (12).

19. Echangeur de chaleur des gaz d'échappement, activable, selon la revendication 18, **caractérisé en ce que** le tube intérieur (26) est supporté par rapport au carter (15) et par rapport au premier conduit des gaz d'échappement (20), par au moins un élément support extérieur, en particulier par au moins un cadre support circulaire (28).

20. Echangeur de chaleur des gaz d'échappement, activable, selon la revendication 19, **caractérisé en ce que** l'élément support au moins au nombre de un est fixé seulement sur un côté, où l'élément support est fixé de préférence de façon non détachable, en particulier par soudage, de préférence sur une partie de l'appui de l'élément support, au niveau du point de fixation.

21. Echangeur de chaleur des gaz d'échappement, activable, selon la revendication 20, **caractérisé en ce que** l'élément support au moins au nombre de un est fixé sur le tube intérieur (26) et est mobile axialement par rapport au carter (15) ou par rapport au premier conduit des gaz d'échappement (20).

22. Echangeur de chaleur des gaz d'échappement, activable, selon l'une quelconque des revendications précédentes, **caractérisé en ce que** les premier et deuxième conduits des gaz d'échappement (20, 25) sont de même longueur et débouchent dans un espace de collecteur commun (16) des gaz d'échappement qui mène à la conduite de sortie des gaz d'échappement (12).

23. Echangeur de chaleur des gaz d'échappement, activable, selon l'une quelconque des revendications précédentes, **caractérisé en ce qu'**au moins une partie des conduits des gaz d'échappement (20, 25) présente une section rectangulaire.

24. Echangeur de chaleur des gaz d'échappement, activable, selon l'une quelconque des revendications précédentes, **caractérisé en ce qu'**un carter (15) entourant le premier et le deuxième conduit des gaz d'échappement (20, 25) est disposé sur la cage de soupape (41) de la soupape de commande, en particulier soudé de façon étanche aux gaz, où le carter (15) loge les deux conduits des gaz d'échappement (20, 25) et, de préférence, limite un espace de collecteur (16) des gaz d'échappement menant à la conduite de sortie des gaz d'échappement.

25. Echangeur de chaleur des gaz d'échappement, activable, selon l'une quelconque des revendications précédentes, **caractérisé en ce que** les composants se trouvant en contact avec le flux de gaz d'échappement, comme par exemple le carter (15), la cage de soupape (41), la tige de soupape (68), le tube intérieur (26), sont réalisés dans des matériaux métalliques, en particulier en tôle.

26. Echangeur de chaleur des gaz d'échappement, activable, selon l'une quelconque des revendications précédentes, **caractérisé en ce que** la cage de soupape (41) présente trois chambres (44, 45) configurées les unes à côté des autres, où chacune des chambres (44, 45) présente une ouverture de raccordement sortant de la cage de soupape, où une chambre centrale (44) est divisée par deux chambres extérieures (45), à chaque fois par une paroi de séparation (48) qui présente à chaque fois une ouverture de passage (49), où les ouvertures de passage (49) peuvent être fermées par le disque de la soupape, où l'ouverture de raccordement de la chambre centrale (44) est reliée fluidiquement à la conduite d'alimentation des gaz d'échappement (11), chacune des deux chambres extérieures (45) étant à chaque fois raccordée fluidiquement à un conduit des gaz d'échappement (20, 25).

27. Echangeur de chaleur des gaz d'échappement, activable, selon l'une quelconque des revendications précédentes, **caractérisé en ce que** l'échangeur de chaleur (21) traversé par un liquide de refroidissement est, dans le circuit de refroidissement du moteur à combustion interne, disposé en aval, et en particulier directement en aval dudit moteur.

28. Echangeur de chaleur des gaz d'échappement, activable, selon l'une quelconque des revendications précédentes, **caractérisé en ce que** le liquide de refroidissement de l'échangeur de chaleur (21) est le liquide de refroidissement du moteur à combustion interne.
